# EUROPEAN PATENT APPLICATION

(11) **EP 4 620 585 A1**
(43) Date of publication of application: **24.09.2025**
(21) Application number: 23891235.6
(22) Date of filing: 12.10.2023
(51) Int. Cl.: B09B 3/40, C09J 11/04, C09J 11/06, C09J 183/04

(54) **DISASSEMBLY METHOD FOR BONDED MEMBER AND EASILY-DISASSEMBLED SILICONE-BASED LIQUID ADHESIVE AGENT**

(30) Priority: 16.11.2022 JP 2022183084
(71) Applicant: Shin-Etsu Chemical Co., Ltd., Chiyoda-ku Tokyo 100-0005 (JP)
(72) Inventor: KAMEDA, Norio, Annaka-shi Gunma 379-0224 (JP)
(74) Representative: Mewburn Ellis LLP
(86) International application number: PCT/JP2023/036985
(87) International publication number: WO 2024/106077

(57) **Abstract**

In the present invention, a bonded member is obtained by bonding together a plurality of members, including a member in which at least a portion of a bonding interface is metal, by means of a cured product obtained by curing a curable silicone-based liquid adhesive agent, which contains 25-80 mass% of a hydroxide compound having a decomposition temperature of 180-600°C and in which the content of a material for generating heat by electromagnetic induction is no more than 3 mass%. The bonded member exhibits sealing properties at room temperature and, moreover, it is possible to easily disassemble the bonded member in a short time and with little consumed energy, even after exposure to high temperatures of approximately 150°C, by heating the metal portion at the bonding interface of the bonded member by electromagnetic induction, and it is possible to recycle the disassembled member.

## Description

### TECHNICAL FIELD

This invention relates to a method for disassembling a joined assembly using a curable liquid silicone-base adhesive which enables to easily and briefly carry out such operations as recovery, repair and recycle of automobile parts, typically automobile electric parts, and electric/electronic parts, and a liquid silicone-base adhesive adapted for easy disassembly.

### BACKGROUND ART

In these days, recyclability is required in a variety of fields from the aspects of environmental friendliness and cost reduction. In the automobile and electric/electronic fields, it is necessary to disassemble a joined assembly into members so that the members may be recycled. The joined assembly must have a positive sealing performance because the joined assembly plays the important role of preventing the entry of dust and water from the outside and protecting the inside part. Adhesive seals provide the most effective sealing performance while it is required to maintain adhesiveness even under various conditions, like heat resistance and moisture resistance. Since the cured product is in most cases tightly bonded to members for this reason, it is not easy to separate the bonded members.

With the aim to recycle a joined assembly using a curable resin composition, for example, JP-A 2003-026784 (Patent Document 1) discloses a joined assembly using a polyol-based curable composition, wherein the composition is softened or liquefied by heating at 150-200°C, after which the members bonded with the cured product are separated. JP-A 2002-327163 (Patent Document 2) discloses a bonded structure using a moisture-curable adhesive based on a urethane prepolymer wherein a halogen-based organic solvent is contacted with the bonded structure to reduce the bonding force of the bond portion, after which constituent members of the bonded structure are separated at the bond portion for disassembly. Further, JP-A 2008-120903 (Patent Document 3) proposes a re-peelable pressure-sensitive adhesive tape using an adhesive comprising a vinyl monomer mixture composed mainly of an alkyl (meth)acrylate, wherein normal bonding force is maintained in the bonding duration, and when the bonded members are separated and disassembled, the bonding force is lowered by heating, so that the members may be readily separated and disassembled. JP 6221630 (Patent Document 4) proposes a composition comprising an oxyalkylene polymer and a tackifying resin, which is reworkable and re-bondable to maintain sealing performance after reworking.

On the other hand, silicone base adhesives and sealants have better heat resistance, weather resistance and other properties than the organic adhesives and are widely used in automobile, electric/electronic, and building fields. However, the silicone base adhesives and sealants are difficultly decomposed even by applying heat, leaving the problem of difficult repair or recycle.

As a silicone base adhesive which achieves a tight seal and allows for easy disassembly of members, a masking type silicone base adhesive is proposed. One of the masking type silicone base adhesives free of a tackifier is a silicone base adhesive to which a release agent is added to impart parting properties relative to glass and metals. This silicone base adhesive, however, has the problem that in a hot durability test in excess of 200°C, the release agent itself is thermally decomposed to lose its effectiveness so that the silicone base adhesive is thermally bonded to the members to retard separation. Then recovery and repair are difficult.

Thus, there is a need for a joined assembly which can be recycled even in the application where they are bonded or joined with a silicone base adhesive, and a disassembly method.

### PRIOR ART DOCUMENTS

### PATENT DOCUMENTS

Patent Document 1: JP-A 2003-026784
Patent Document 2: JP-A 2002-327163
Patent Document 3: JP-A 2008-120903
Patent Document 4: JP 6221630
Patent Document 5: JP-A 2022-183437
Patent Document 6: JP Appln. No. 2021-160447

### SUMMARY OF INVENTION

### TECHNICAL PROBLEM

An object of the invention, which has been made under the above-mentioned circumstances, is to provide a method for disassembling a joined assembly comprising members bonded with a silicone base adhesive, which exerts sealing performance at room temperature (23°C±15°C, the same holds true, hereinafter) and even after exposure to a high temperature of about 150°C, and which can be easily recycled in a short time and with a low energy consumption, and a liquid silicone base adhesive adapted for easy disassembly for use in the disassembling method.

### SOLUTION TO PROBLEM

Making extensive investigations to attain the above object, the inventor proposed a disassembly method in the previous patent application: JP-A 2022-183437 corresponding to JP Patent Appln. No. 2021-090750 (Patent Document 5), that when a specific proportion of aluminum hydroxide which is decomposed at about 160°C is blended in a curable liquid silicone base adhesive, the joined assembly exerts sealing performance at room temperature and even after exposure to a high temperature of about 150°C, but loses the sealing performance at a high temperature in excess of 160°C to facilitate separation of the members. This method, however, suffers from excessive energy consumption because of heating in a heating oven for a long time of several hours.

Also in JP Patent Appln. No. 2021-160447 (Patent Document 6), a method of easily disassembling members apart from a joined assembly comprising a plurality of members joined with a curable liquid silicone base adhesive containing particles capable of heat generation with microwave and a hydroxide compound having a decomposition temperature of 180-600°C, the method comprising the step of irradiating microwave to the joined assembly for disassembling members apart. This method, however, still takes a time of several minutes. Disassembly in a shorter time is desired.

Making extensive investigations on a joined assembly and a method of disassembling the same which enables recycling with a less energy consumption in a shorter time, with the aim to increase the efficiency and to save the energy consumption of the operations of recovery, repair and recycling of automobile parts and electric/electronic parts, the inventor has found that a joined assembly composed of a plurality of members including a member in which at least a portion of its bond interface is a metal, the members being bonded with a cured product obtained by curing a curable liquid silicone adhesive comprising 25 to 80% by weight of a hydroxide compound (especially, metal hydroxide or metal oxide hydroxide) having a decomposition temperature of 180 to 600°C and up to 3% by weight of a material capable of heat generation by electromagnetic induction, exerts sealing performance at room temperature and even after exposure to a high temperature of about 150°C, and that the joined assembly can be easily disassembled in a short time and with a less energy consumption by heating the metal portion of the bond interface in the joined assembly by electromagnetic induction. The disassembled members are ready for recycling. The invention is predicated on this finding.

Accordingly, the invention provides a method of disassembling a joined assembly and a liquid silicone adhesive adapted for easy disassembly, as defined below.
[1] In conjunction with a joined assembly composed of a plurality of members including a member in which at least a portion of its bond interface is a metal, the members being bonded with a cured product obtained by curing a curable liquid silicone adhesive comprising 25 to 80% by weight of a hydroxide compound having a decomposition temperature of 180 to 600°C and up to 3% by weight of a material capable of heat generation by electromagnetic induction,
   a method for disassembling the joined assembly comprising the steps of heating the metal portion of the bond interface by electromagnetic induction and separating the member containing the metal portion from the remaining members.
[2] The disassembling method of [1] wherein the curable liquid silicone adhesive is a condensation cure type liquid silicone adhesive, an addition reaction cure type liquid silicone adhesive or UV cure type liquid silicone adhesive.
[3] The disassembling method of [1] or [2] wherein the hydroxide compound having a decomposition temperature of 180 to 600°C is at least one compound selected from aluminum hydroxide, magnesium hydroxide, and aluminum oxide hydroxide (or boehmite).
[4] The disassembling method of any one of [1] to [3] wherein the heating step is by electromagnetic induction at a frequency of 100 kHz to 500 kHz.
[5] The disassembling method of any one of [1] to [4] wherein the joined assembly is an automobile part or electric/electronic part.
[6] A condensation cure type liquid silicone adhesive adapted for easy disassembly for use in the disassembling method of any one of [1] to [5], comprising the following components (A) to (E) and containing up to 3% by weight of a material capable of heat generation by electromagnetic induction,
   (A) a hydroxide compound having a decomposition temperature of 180 to 600°C, in an amount of 25 to 80% by weight of the overall adhesive,
   (B) 100 parts by weight of a linear diorganopolysiloxane capped at both ends of the molecular chain with a silicon-bonded hydroxy group and/or hydrolyzable silyl group,
   (C) 0.1 to 40 parts by weight of a hydrolyzable organosilane compound having at least three silicon-bonded hydrolyzable groups per molecule and/or a partial hydrolytic condensate thereof,
   (D) 0.001 to 20 parts by weight of a curing catalyst, and
   (E) 0.05 to 20 parts by weight of a silane coupling agent.
[7] An addition reaction cure type liquid silicone adhesive adapted for easy disassembly for use in the disassembling method of any one of [1] to [5], comprising the following components (A) and (F) to (H) and containing up to 3% by weight of a material capable of heat generation by electromagnetic induction,
   (A) a hydroxide compound having a decomposition temperature of 180 to 600°C, in an amount of 25 to 80% by weight of the overall adhesive,
   (F) 100 parts by weight of an alkenyl-containing organopolysiloxane having a silicon-bonded alkenyl group at the end of the molecular chain,
   (G) an organohydrogenpolysiloxane having at least two silicon-bonded hydrogen atoms per molecule in an amount to provide 0.01 to 3 moles of silicon-bonded hydrogen per mole of the silicon-bonded alkenyl group in component (F),
   (H) a platinum group metal catalyst in an amount to provide 0.01 to 1,000 ppm by weight of platinum group metal atom based on the total weight of components (F) and (G), and
   (I) 0.05 to 20 parts by weight of a tackifier.
[8] A UV cure type liquid silicone adhesive adapted for easy disassembly for use in the disassembling method of any one of [1] to [5], comprising the following components (A), (J) and (K) and containing up to 3% by weight of a material capable of heat generation by electromagnetic induction,
   (A) a hydroxide compound having a decomposition temperature of 180 to 600°C, in an amount of 25 to 80% by weight of the overall adhesive,
   (J) 100 parts by weight of a UV-reactive organopolysiloxane, and
   (K) 0.01 to 10 parts by weight of a photopolymerization initiator.

### ADVANTAGEOUS EFFECTS OF INVENTION

According to the method of disassembling a joined assembly, the cured product of the curable liquid silicone adhesive exerts bonding and/or sealing performance at room temperature to a high temperature of about 150°C, but loses the bonding and/or sealing performance when the cured product serving as a bonding member is indirectly heated by heating the metal portion of the bond interface by electromagnetic induction. Then the member containing metal in the bond interface can be separated in a short time and with a less amount of energy. The joined assembly can be easily disassembled and recycled. The curable liquid silicone adhesive used in the disassembling method is useful as a bonding or sealing agent at the joint site to be heat resistant and recycled.

It is noted that the "heat resistant temperature" of members to be disassembled refers to the upper limit of the temperature at which the members undergo neither heat decomposition nor softening when the members are held at that temperature for 1 minute.

### BRIEF DESCRIPTION OF DRAWINGS

[FIG. 1] FIG. 1 is an image of the surface state of an ADC12 substrate in Example 1 prior to electromagnetic induction heating, as observed under a digital microscope.
[FIG. 2] FIG. 2 is an image of the surface state of the ADC12 substrate in Example 1 after electromagnetic induction heating, as observed under a digital microscope.

### DESCRIPTION OF EMBODIMENTS

Now the invention is described in detail.

In conjunction with a joined assembly composed of a plurality of members including a member in which at least a portion of its bond interface is a metal, the members being joined with a cured product obtained by curing a curable liquid silicone adhesive comprising 25 to 80% by weight of a hydroxide compound (especially, metal hydroxide or metal oxide hydroxide) having a decomposition temperature of 180 to 600°C and up to 3% by weight of a material capable of heat generation by electromagnetic induction, the invention provides a method for disassembling the joined assembly comprising the steps of heating the metal portion of the bond interface by electromagnetic induction and separating the metal-containing member from the remaining members.

### [Curable liquid silicone adhesive]

The curable liquid silicone adhesive used herein serves as a bonding member for joining a plurality of members including a member in which at least a portion of its bond interface is a metal, is an adhesive comprising (A) a hydroxide compound having a decomposition temperature of 180 to 600°C, up to 3% by weight of a material capable of heat generation by electromagnetic induction, and a polymer having a backbone composed of siloxane bonds as a base polymer. The cure type of the adhesive is preferably selected from condensation cure, addition reaction cure, and UV-cure types.

### [Hydroxide compound having a decomposition temperature of 180 to 600°C]

Most often, the hydroxide compound having a decomposition temperature of 180 to 600°C is preferably a metal hydroxide or metal oxide hydroxide. Typical are aluminum hydroxide having a decomposition temperature of about 180°C, magnesium hydroxide having a decomposition temperature of about 300°C, and aluminum oxide hydroxide (or boehmite) having a decomposition temperature of about 500°C. As used herein, the "decomposition temperature" refers to the temperature at which a hydroxide compound starts to decompose and generate water.

These compounds start decomposition upon heating, exert an extinguishing effect because decomposition is accompanied with water generation, and are used as flame retardants in the prior art. The invention intends to utilize the water generated by decomposition to generate bubbles in the cured product of the curable liquid silicone adhesive for thereby reducing the bonding force. The joined assembly can then be easily disassembled in a short time.

As the hydroxide compound having a decomposition temperature of 180 to 600°C, the compound in particle form having an average particle size of up to 50 µm, preferably 0.5 to 20 µm is used. An average particle size in excess of 50 µm is incompatible with decomposition. As used herein, the average particle size may be determined as a cumulative weight average value D50 (or median diameter) using a particle size distribution measuring system according to the laser light diffraction method or the like.

The surface of the hydroxide compound may be either untreated or treated (hydrophobic treatment). In the case of surface treatment, the treating agents are commonly used ones, for example, silane coupling agents and fatty acids. The surface treatment may be performed by any well-known methods. The amount of treatment is preferably up to 3% by weight, typically 0.1 to 3% by weight, especially 0.2 to 2% by weight, though not critical.

The hydroxide compound may be used alone or in admixture of two or more compounds which are different in average particle size or surface treatment.

The amount of the hydroxide compound is 25 to 80% by weight, preferably 30 to 70% by weight, more preferably 35 to 65% by weight of the overall curable liquid silicone adhesive. If the amount is less than 25% by weight, the decomposition (or bubble formation) of the hydroxide compound is insufficient, with a loss of disassembly. If the amount exceeds 80% by weight, the adhesive experiences a viscosity buildup and is awkward to dispense during mixing and applying steps.

### [Material capable of heat generation by electromagnetic induction]

Exemplary of the material capable of heat generation by electromagnetic induction are metal materials and carbon materials such as carbon fibers and carbon black. The metal materials used in the curable liquid silicone adhesive include aluminum powder, iron powder, copper powder, and powders of alloys thereof.

In the curable liquid silicone adhesive, the amount of the material capable of heat generation by electromagnetic induction should be as small as possible. Even when the material capable of heat generation by electromagnetic induction is contained as one of optional additives, typically a coloring agent, the amount should be up to 3% by weight (0 to 3% by weight), especially up to 1% by weight (0 to 1% by weight) of the curable liquid silicone adhesive. An amount in excess of 3% by weight adversely affects disassembly.

The electromagnetic induction heating used in the heating step is capable of heating metal materials and carbon materials (e.g., carbon fibers, graphite and carbon black) as conductor. In the practice of the invention, the metal portion of the bond interface used in the joined assembly is heated by electromagnetic induction whereby separation can efficiently take place in a short time. However, if the material capable of heat generation by electromagnetic induction is added to the adhesive itself, the efficiency of disassembly is reduced because the energy of electromagnetic induction is used in heating of the bonding member (the cured product of the adhesive) as well. When an organic resin is used as members, the bonding member is heated and the organic resin in contact with the bonding member is accordingly heated to a temperature beyond its heat resistance so that the organic resin may be dissolved or decomposed, which is unsuitable for recycling. It is thus desirable to minimize the addition of the material capable of heat generation by electromagnetic induction to the curable liquid silicone adhesive (i.e., up to 3% by weight).

### [Condensation cure type liquid silicone adhesive]

The condensation cure type liquid silicone adhesive contains, in addition to the hydroxide compound having a decomposition temperature of 180 to 600°C as component (A), (B) a linear diorganopolysiloxane capped at both ends of the molecular chain with a silicon-bonded hydroxy group and/or hydrolyzable silyl group as a base polymer, (C) a hydrolyzable organosilane compound having at least three silicon-bonded hydrolyzable groups per molecule and/or a partial hydrolytic condensate thereof as a crosslinker, (D) a curing catalyst, and (E) a silane coupling agent as a tackifier wherein a cured product is obtained by utilizing hydrolytic condensation reaction with the aid of airborne water or moisture at room temperature.

The condensation cure type liquid silicone adhesive is preferably a liquid silicone adhesive adapted for easy disassembly comprising:
(A) a hydroxide compound having a decomposition temperature of 180 to 600°C, in an amount of 25 to 80% by weight of the overall adhesive,
(B) 100 parts by weight of a linear diorganopolysiloxane capped at both ends of the molecular chain with a silicon-bonded hydroxy group and/or hydrolyzable silyl group,
(C) 0.1 to 40 parts by weight of a hydrolyzable organosilane compound having at least three silicon-bonded hydrolyzable groups per molecule and/or a partial hydrolytic condensate thereof,
(D) 0.001 to 20 parts by weight of a curing catalyst, and
(E) 0.05 to 20 parts by weight of a silane coupling agent,
   the content of a material capable of heat generation by electromagnetic induction being up to 3% by weight.

The organopolysiloxane (B) serving as the base polymer or main component is a linear diorganopolysiloxane capped at both ends of the molecular chain with a silicon-bonded hydroxy group (or silanol group) and/or hydrolyzable silyl group. The hydrolyzable silyl group is preferably an alkoxysilyl group or alkoxy-substituted alkoxysilyl group.

When a silicon-bonded hydroxy group (or silanol group) is contained, it is preferred that one silicon-bonded hydroxy group (i.e., hydroxysilyl or silanol group) be contained at each of both ends of the molecular chain.

When an alkoxysilyl or alkoxy-substituted alkoxysilyl group is contained at the end as the hydrolyzable silyl group, it is recommended that two or three silicon-bonded alkoxy groups (i.e., alkoxysilyl groups) or silicon-bonded alkoxy-substituted alkoxy groups (i.e., alkoxyalkoxysilyl groups) are contained at each of both ends of the molecular chain, that is, dialkoxyorganosilyl or bis(alkoxylalkoxy)organosilyl groups, or trialkoxysilyl or tris(alkoxylalkoxy)silyl groups are contained.

The alkoxy groups are preferably alkoxy groups of 1 to 10 carbon atoms, especially 1 to 4 carbon atoms, for example, methoxy, ethoxy, propoxy, isopropoxy, butoxy, isobutoxy, tert-butoxy, hexyloxy and octyloxy.

The alkoxy-substituted alkoxy groups are preferably alkoxy-substituted alkoxy groups of 2 to 10 carbon atoms, especially 2 to 4 carbon atoms, for example, methoxyethoxy, ethoxyethoxy and methoxypropoxy.

The linear diorganopolysiloxane capped at both ends of the molecular chain with a silicon-bonded hydroxy group and/or hydrolyzable silyl group is preferably a diorganopolysiloxane having hydroxy groups (silanol groups), methoxy groups or ethoxy groups at both ends thereof, especially only at both ends thereof.

The silicon-bonded organic groups other than the hydroxy and hydrolyzable groups include substituted or unsubstituted monovalent hydrocarbon groups of 1 to 18 carbon atoms, preferably 1 to 10 carbon atoms. Examples of the monovalent hydrocarbon group include alkyl groups such as methyl, ethyl, propyl, isopropyl, butyl, isobutyl, tert-butyl, hexyl, heptyl, octyl, and 2-ethylhexyl; cycloalkyl groups such as cyclopentyl and cyclohexyl; alkenyl groups such as vinyl and allyl; aryl groups such as phenyl, tolyl and naphthyl; aralkyl groups such as benzyl, phenylethyl and phenylpropyl; and substituted forms of the foregoing groups in which some or all carbon-bonded hydrogen atoms are substituted by halogen atoms (e.g., fluorine, bromine and chlorine) or cyano groups, for example, halogenated monovalent hydrocarbon groups such as trifluoropropyl and chloropropyl and cyanoalkyl groups such as β-cyanoethyl and γ-cyanopropyl. Inter alia, methyl is preferred.

The organopolysiloxane as the base polymer or main component should preferably have a viscosity at 23°C of 50 to 1,000,000 mPa·s, more preferably 100 to 300,000 mPa·s. If the viscosity is below the lower limit, the resulting cured product may not have satisfactory mechanical properties. If the viscosity exceeds the upper limit, workability is sometimes lost. Herein, the viscosity is measured at 23°C by a rotational viscometer, for example, BL, BH, BS or cone plate type or rheometer (the same holds true, hereinafter).

The organopolysiloxane as the base polymer or main component may be used alone or in admixture of two or more.

The hydrolyzable organosilane compound and/or a partial hydrolytic condensate thereof serving as the crosslinker or curing agent (C) is a hydrolyzable organosilane compound having at least three silicon-bonded hydrolyzable groups per molecule and/or a partial hydrolytic condensate thereof (i.e., siloxane compounds, typically siloxane oligomers, having at least three residual hydrolyzable groups per molecule). Component (C) serves as a crosslinker or curing agent in that the linear diorganopolysiloxane capped at both ends of the molecular chain with silicon-bonded hydroxy groups and/or hydrolyzable silyl groups as the base polymer undergoes hydrolytic condensation reaction with at least three hydrolyzable groups in the molecule to form a crosslinking structure.

Exemplary of the hydrolyzable group on the hydrolyzable organosilane compound are alkoxy, alkoxy-substituted alkoxy, acyloxy, alkenoxy, ketoxime, aminoxy, and amide groups of 1 to 10 carbon atoms. Examples thereof include alkoxy groups such as methoxy, ethoxy and propoxy; alkoxy-substituted alkoxy groups such as methoxyethoxy, ethoxyethoxy and methoxypropoxy; acyloxy groups such as acetoxy and octanoyloxy; alkenoxy groups such as vinyloxy, isopropenoxy, and 1-ethyl-2-methylvinyloxy; ketoxime groups such as dimethylketoxime, methylethylketoxime and methylisobutylketoxime; aminoxy groups such as dimethylaminoxy and diethylaminoxy; and amide groups such as N-methylacetamide and N-ethylacetamide.

The hydrolyzable organosilane compound may have a silicon-bonded organic group other than the above-mentioned hydrolyzable group. Exemplary of the silicon-bonded organic group other than the hydrolyzable group are substituted or unsubstituted, monovalent hydrocarbon groups of 1 to 18 carbon atoms, preferably 1 to 10 carbon atoms. Examples thereof include alkyl groups such as methyl, ethyl, propyl, isopropyl, butyl, isobutyl, tert-butyl, hexyl, heptyl, octyl, 2-ethylhexyl, nonyl, decyl and octadecyl; cycloalkyl groups such as cyclopentyl and cyclohexyl; alkenyl groups such as vinyl and allyl; aryl groups such as phenyl, tolyl, xylyl and naphthyl; aralkyl groups such as benzyl, phenylethyl and phenylpropyl; and substituted forms of the foregoing groups in which some or all carbon-bonded hydrogen atoms are substituted by halogen atoms (e.g., fluorine, bromine and chlorine) or cyano groups, for example, halogenated monovalent alkyl groups such as 3-chloropropyl and 3,3,3-trifluoropropyl. Of the substituted or unsubstituted, monovalent hydrocarbon groups, methyl, ethyl, propyl, vinyl and phenyl are preferred.

Examples of the hydrolyzable organosilane compound and partial hydrolytic condensate thereof include alkoxysilanes such as methyltrimethoxysilane, ethyltrimethoxysilane, decyltrimethoxysilane, vinyltrimethoxysilane, phenyltrimethoxysilane, methyltriethoxysilane, ethyltriethoxysilane, vinyltriethoxysilane, phenyltriethoxysilane, vinyltris(1-cyclopenten-1-yloxy)silane, tetramethoxysilane, and tetraethoxysilane; ketoximesilanes such as methyltris(dimethylketoxime)silane, methyltris(methylethylketoxime)silane, ethyltris(methylethylketoxime)silane, methyltris(methylisobutylketoxime)silane, and vinyltris(methylethylketoxime)silane; alkoxy-substituted alkoxysilanes such as methyltri(methoxymethoxy)silane, ethyltri(methoxymethoxy)silane, vinyltri(methoxymethoxy)silane, phenyltri(methoxymethoxy)silane, methyltri(ethoxymethoxy)silane, ethyltri(ethoxymethoxy)silane, vinyltri(ethoxymethoxy)silane, phenyltri(ethoxymethoxy)silane, tetra(methoxymethoxy)silane, and tetra(ethoxymethoxy)silane; amioxysilanes such as methyltris(N,N-diethylaminoxy)silane; amidosilanes such as methyltris(N-methylacetamido)silane, methyltris(N-butylacetamido)silane, and methyltris(N-cyclohexylacetamido)silane; alkenoxysilanes such as methyltriisopropenoxysilane, vinyltriisopropenoxysilane, and phenyltriisopropenoxysilane; acyloxysilanes such as methyltriacetoxysilane and vinyltriacetoxysilane; and partial hydrolytic condensates of the foregoing hydrolyzable organosilane compounds.

The hydrolyzable organosilane compound as the crosslinker or curing agent is clearly distinguished from the silane coupling agent (E) as the tackifier in that the compound does not contain in its molecule a monovalent hydrocarbon group substituted with a functional group having a heteroatom such as nitrogen, oxygen or sulfur.

The hydrolyzable organosilane compound and/or partial hydrolytic condensate thereof may be used alone or in admixture of two or more.

The amount of the hydrolyzable organosilane compound and/or partial hydrolytic condensate thereof blended as the crosslinker or curing agent is 0.1 to 40 parts by weight, preferably 1 to 20 parts by weight per 100 parts by weight of the linear diorganopolysiloxane capped at both ends of the molecular chain with a silicon-bonded hydroxy group and/or hydrolyzable silyl group. If the amount of the hydrolyzable organosilane compound and/or partial hydrolytic condensate thereof is below the lower limit (0.1 part by weight), there is a possibility of inviting a lowering of curability and storage stability. An amount in excess of the upper limit (40 parts by weight) is economically disadvantageous and may result in a cured product having reduced elongation and poor durability.

As the curing catalyst (D), any of condensation catalysts commonly used in the art as the cure promoter for liquid silicone adhesives of condensation cure type (or room temperature-curable organopolysiloxane compositions) may be used. Examples include organotin compounds such as dibutyltin methoxide, dibutyltin diacetate, dibutyltin dioctate, dibutyltin dilaurate, dioctyltin dilaurate, dioctyltin dioctate, dioctyltin dineodecanoate, dimethyltin dimethoxide, and dimethyltin diacetate; organotitanium compounds such as tetrapropyl titanate, tetrabutyl titanate, tetra-2-ethylhexyl titanate, diisopropoxytitanium bis(ethylacetoacetate), and dimethoxytitanium diacetylacetonate; amine compounds such as hexylamine, and tetramethylguanidylpropyl trimethoxysilane; and salts thereof. They may be used alone or in admixture.

The amount of the curing catalyst blended is 0.001 to 20 parts by weight, preferably 0.005 to 5 parts by weight, more preferably 0.01 to 2 parts by weight per 100 parts by weight of the linear diorganopolysiloxane capped at both ends of the molecular chain with a silicon-bonded hydroxy group and/or hydrolyzable silyl group. If the amount of the curing catalyst is below the lower limit (0.001 part by weight), sometimes no catalytic effect is observed. If the amount of the curing catalyst exceeds the upper limit (20 parts by weight), the composition may become disadvantageous in cost and lose durability or adhesiveness.

To the liquid silicone adhesive of condensation cure type, a silane coupling agent for enhancing bond strength and having the function of a tackifying component is added, that is, a hydrolyzable silane compound having in the molecule a monovalent hydrocarbon group substituted with a functional group (exclusive of guanidyl) containing a heteroatom such as nitrogen, oxygen or sulfur, which is known as carbon-functional silane compound.

The silane coupling agent serving as the tackifying component may be any of silane coupling agents well known in the art. In particular, an alkoxy or alkenoxy group is preferred as the hydrolyzable group. Alkoxy groups such as methoxy, ethoxy and propoxy and alkenoxy groups such as vinyloxy, isopropenoxy and 1-ethyl-2-methylvinyloxy are exemplary.

Preferred examples of the monovalent hydrocarbon group substituted with a functional group (exclusive of guanidyl) containing a heteroatom such as nitrogen, oxygen or sulfur include monovalent hydrocarbon groups of 1 to 20 carbon atoms having at least one substituted or unsubstituted amino group, substituted or unsubstituted imino group, mercapto group, epoxy group or (meth)acryloxy group. Exemplary are γ-acrloxypropyl, γ-methacryloxypropyl, β-(3,4-epoxycyclohexyl)ethyl, γ-glycidoxypropyl, N-β-(aminoethyl)-γ-aminopropyl, γ-aminopropyl, a group having the formula: 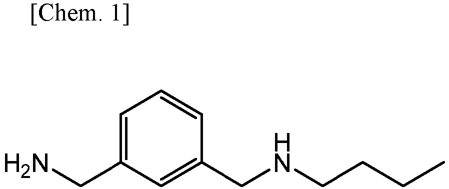 and γ-mercaptopropyl.

The silane coupling agent may have a silicon-bonded organic group other than the foregoing hydrolyzable group and functional group-substituted monovalent hydrocarbon group. Preferred examples of the silicon-bonded organic group other than the hydrolyzable group and functional group-substituted monovalent hydrocarbon group include monovalent hydrocarbon groups of 1 to 10 carbon atoms, for example, alkyl groups such as methyl, ethyl, propyl, isopropyl, butyl, isobutyl, tert-butyl, hexyl, heptyl and octyl; cycloalkyl groups such as cyclopentyl and cyclohexyl; alkenyl groups such as vinyl and allyl; aryl groups such as phenyl, tolyl and xylyl; and aralkyl groups such as benzyl and phenethyl. Inter alia, methyl and ethyl are preferred.

Examples of the silane coupling agent include γ-acryloxypropyltrimethoxysilane, γ-methacryloxypropyltrimethoxysilane, β-(3,4-epoxycyclohexyl)ethyltrimethoxysilane, γ-glycidoxypropyltrimethoxysilane, γ-glycidoxypropylmethyldiethoxysilane, N-β-aminoethyl)-γ-aminopropyltrimethoxysilane, γ-aminopropyltriethoxysilane, a silane compound having the formula: 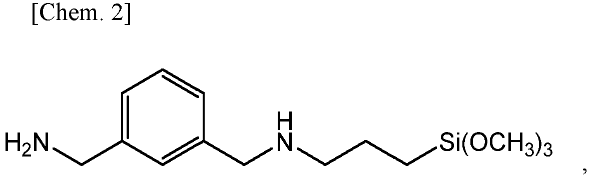 γ-mercaptopropyltrimethoxysilane, γ-glycidoxypropyltriisopropenoxysilane, and γ-glycidoxypropylmethyldiisopropenoxysilane. In particular, amino-containing silane coupling agents are preferably used.

The silane coupling agent may be used alone or in admixture.

The amount of the silane coupling agent (E) blended is 0.05 to 20 parts by weight, preferably 0.1 to 15 parts by weight, more preferably 0.5 to 10 parts by weight per 100 parts by weight of the linear diorganopolysiloxane capped at both ends of the molecular chain with a silicon-bonded hydroxy group and/or hydrolyzable silyl group. If the amount is less than 0.05 part by weight, sufficient adhesiveness is not available. If the amount exceeds 20 parts by weight, the cured product may have poor weather resistance and mechanical properties.

Besides the foregoing components, any optional components may be formulated in the liquid silicone adhesive of condensation cure type as long as the objects of the invention are not impaired. Suitable optional components include inorganic fillers other than component (A), coloring agents such as pigments, dyes and fluorescent brighteners; antifungal agents; mildew-proofing agents; and plasticizers such as silicone oil or non-functional organopolysiloxane.

Examples of the inorganic filler other than component (A) as optional component include carbon such as acetylene black, dry silica (e.g., fumed silica), wet silica (e.g., precipitated silica), finely divided quartz, diatomaceous earth powder, finely divided alumina, magnesia powder, calcium carbonate such as colloidal calcium carbonate and heavy calcium carbonate, and inorganic fillers in fine powder form of the foregoing fillers which are surface-treated with silanes, silazanes, or polysiloxanes having a low degree of polymerization, exclusive of component (A).

When the inorganic filler other than component (A) is blended, the amount of the filler is preferably 0.1 to 800 parts by weight, more preferably 0.5 to 600 parts by weight per 100 parts by weight of the linear diorganopolysiloxane capped at both ends of the molecular chain with a silicon-bonded hydroxy group and/or hydrolyzable silyl group.

The liquid silicone adhesive of condensation cure type may be prepared by uniformly mixing the foregoing components on a well-known mixer in a moisture-proof state (in dry atmosphere or under reduced pressure) according to the standard procedure.

The liquid silicone adhesive of condensation cure type cures as it is allowed to stand, for example, at room temperature (23°C±15°C). The shaping method and curing conditions for the adhesive may be selected from well-known methods and conditions in accordance with a particular liquid silicone adhesive of condensation cure type. The adhesive may be cured, for example, by holding it in air under 23°C/50% RH conditions for several hours to several days (e.g. 6 hours to 7 days).

### [Liquid silicone adhesive of addition reaction cure type]

The liquid silicone adhesive of addition reaction cure type is a composition comprising, in addition to the hydroxide compound having a decomposition temperature of 180 to 600°C as component (A), (F) an alkenyl-containing organopolysiloxane having a silicon-bonded alkenyl group, typically vinyl at the end of the molecular chain as a base polymer, (G) an organohydrogenpolysiloxane having at least two silicon-bonded hydrogen atoms (SiH groups) per molecule as a crosslinker, (H) a platinum group metal catalyst or hydrosilation addition reaction catalyst, and (I) a tackifier wherein the adhesive crosslinks by addition reaction (hydrosilation reaction) of SiH groups to vinyl groups, yielding a cured product.

The preferred liquid silicone adhesive of addition reaction cure type is a liquid silicone adhesive adapted for easy disassembly comprising:
(A) a hydroxide compound having a decomposition temperature of 180 to 600°C, in an amount of 25 to 80% by weight of the overall adhesive,
(F) 100 parts by weight of an alkenyl-containing organopolysiloxane having a silicon-bonded alkenyl group at the end of the molecular chain,
(G) an organohydrogenpolysiloxane having at least two silicon-bonded hydrogen atoms per molecule in an amount to provide 0.01 to 3 moles of silicon-bonded hydrogen per mole of the silicon-bonded alkenyl group in component (F),
(H) a platinum group metal catalyst in an amount to provide 0.01 to 1,000 ppm by weight of platinum group metal atom based on the total weight of components (F) and (G), and
(I) 0.05 to 20 parts by weight of a tackifier,
   the content of a material capable of heat generation by electromagnetic induction being up to 3% by weight.

The alkenyl-containing organopolysiloxane (F) serving as the base polymer or main component is a linear diorganopolysiloxane capped at the end of the molecular chain (single end or both ends of the molecular chain) with a silyl group having a silicon-bonded alkenyl group such as vinyl group, that is, an organopolysiloxane having on the average at least one, preferably at least two (typically about 2 to 20, preferably about 2 to 10, more preferably about 2 to 5) silicon-bonded alkenyl groups in the molecule. Suitable alkenyl groups include lower alkenyl groups of about 2 to 6 carbon atoms, preferably about 2 to 4 carbon atoms such as vinyl, allyl, propenyl, isopropenyl, butenyl, hexenyl, and cyclohexenyl. The alkenyl-containing organopolysiloxane (F) serving as the base polymer or main component may have a silicon-bonded alkenyl group on a molecular chain side chain as long as it has a silicon-bonded alkenyl group at one end or both ends of the molecular chain.

The silicon-bonded organic group other than the silicon-bonded alkenyl group is not particularly limited as long as it is free of an aliphatic unsaturated bond. Exemplary of the organic group are substituted or unsubstituted, aliphatic unsaturation-free, monovalent hydrocarbon groups of typically 1 to 12 carbon atoms, preferably 1 to 10 carbon atoms. Examples of the substituted or unsubstituted, monovalent hydrocarbon group include alkyl groups such as methyl, ethyl, propyl, butyl, pentyl, hexyl and heptyl; cycloalkyl groups such as cyclohexyl; aryl groups such as phenyl, tolyl, xylyl and naphthyl; aralkyl groups such as benzyl and phenethyl; and substituted forms of the foregoing groups in which some or all of the hydrogen atoms are substituted by halogen atoms such as chlorine, fluorine, and bromine, such as halogenated alkyl groups, e.g., chloromethyl, 3-chloropropyl, and 3,3,3-trifluoropropyl. Of these, alkyl and aryl groups are preferred, with methyl and phenyl being more preferred.

Examples of the alkenyl-containing organopolysiloxane include both end dimethylvinylsiloxy-capped dimethylpolysiloxane, both end dimethylvinylsiloxy-capped dimethylsiloxane/methylvinylsiloxane copolymers, both end dimethylvinylsiloxy-capped dimethylsiloxane/diphenylsiloxane copolymers, both end dimethylvinylsiloxy-capped dimethylsiloxane/methylvinylsiloxane/diphenylsiloxane copolymers, both end dimethylvinylsiloxy-capped methyltrifluoropropylpolysiloxane, both end dimethylvinylsiloxy-capped dimethylsiloxane/methyltrifluoropropylsiloxane copolymers, both end dimethylvinylsiloxy-capped dimethylsiloxane/methyltrifluoropropylsiloxane/methylvinylsiloxane copolymers, both end methyldivinylsiloxy-capped dimethylpolysiloxane, both end methyldivinylsiloxy-capped dimethylsiloxane/methylvinylsiloxane copolymers, both end methyldivinylsiloxy-capped dimethylsiloxane/diphenylsiloxane copolymers, both end methyldivinylsiloxy-capped dimethylsiloxane/methylvinylsiloxane/diphenylsiloxane copolymers, both end methyldivinylsiloxy-capped methyltrifluoropropylpolysiloxane, both end methyldivinylsiloxy-capped dimethylsiloxane/methyltrifluoropropylsiloxane copolymers, both end methyldivinylsiloxy-capped dimethylsiloxane/methyltrifluoropropylsiloxane/methylvinylsiloxane copolymers, both end trivinylsiloxy-capped dimethylpolysiloxane, both end trivinylsiloxy-capped dimethylsiloxane/methylvinylsiloxane copolymers, both end trivinylsiloxy-capped dimethylsiloxane/diphenylsiloxane copolymers, both end trivinylsiloxy-capped dimethylsiloxane/methylvinylsiloxane/diphenylsiloxane copolymers, both end trivinylsiloxy-capped methyltrifluoropropylpolysiloxane, both end trivinylsiloxy-capped dimethylsiloxane/methyltrifluoropropylsiloxane copolymers, both end trivinylsiloxy-capped dimethylsiloxane/methyltrifluoropropylsiloxane/methylvinylsiloxane copolymers, dimethylpolysiloxane capped with trimethylsiloxy at one end and with dimethylvinylsiloxy at the other end, dimethylsiloxane/methylvinylsiloxane copolymers capped with trimethylsiloxy at one end and with dimethylvinylsiloxy at the other end, dimethylsiloxane/diphenylsiloxane copolymers capped with trimethylsiloxy at one end and with dimethylvinylsiloxy at the other end, dimethylsiloxane/methylvinylsiloxane/diphenylsiloxane copolymers capped with trimethylsiloxy at one end and with dimethylvinylsiloxy at the other end, methyltrifluoropropylpolysiloxane capped with trimethylsiloxy at one end and with dimethylvinylsiloxy at the other end, dimethylsiloxane/methyltrifluoropropylsiloxane copolymers capped with trimethylsiloxy at one end and with dimethylvinylsiloxy at the other end, and dimethylsiloxane/methyltrifluoropropylsiloxane/methylvinylsiloxane copolymers capped with trimethylsiloxy at one end and with dimethylvinylsiloxy at the other end.

The alkenyl-containing organopolysiloxane as the base polymer or main component should preferably have a viscosity at 23°C of 100 to 500,000 mPa·s, more preferably 700 to 100,000 mPa·s.

The alkenyl-containing organopolysiloxane as the base polymer or main component may be used alone or in admixture of two or more.

The organohydrogenpolysiloxane (G) serving as the crosslinker or curing agent should have on the average at least 2, preferably at least 3, and preferably up to 500, more preferably up to 200, even more preferably up to 100 silicon-bonded hydrogen atoms (SiH groups) per molecule, and also preferably be free of an aliphatic unsaturated bond in the molecule.

The organohydrogenpolysiloxane contains a silicon-bonded organic group other than the silicon-bonded hydrogen atom, examples of which include substituted or unsubstituted, monovalent hydrocarbon groups of 1 to 10 carbon atoms, preferably 1 to 6 carbon atoms, though not particularly limited. Examples are as exemplified above for the silicon-bonded organic group other than the silicon-bonded alkenyl group mentioned in conjunction with the alkenyl-containing organopolysiloxane, and alkenyl groups such as vinyl and allyl. Of these, aliphatic unsaturation-free, unsubstituted, monovalent hydrocarbon groups such as alkyl and aryl groups are preferred, with methyl and phenyl being more preferred.

Preferred are organohydrogenpolysiloxanes which have about 2 to 300, preferably about 3 to 150, more preferably about 4 to 100 silicon atoms per molecule and which are liquid at room temperature. The silicon-bonded hydrogen atom may be positioned at an end or an intermediate (or non-terminal) position of the molecular chain or both. The molecular structure of the organohydrogenpolysiloxane may be either straight, cyclic, branched or three-dimensional network. Herein, the degree of polymerization (i.e., the repeating number of diorganosiloxane units constituting the backbone, which is an index of the number of silicon atoms in the molecule) may be determined, for example, as the number average degree of polymerization (or number average molecular weight) versus polystyrene standards by gel permeation chromatography (GPC) using toluene or the like as the developing solvent.

Examples of the organohydrogenpolysiloxane include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, methylhydrogensiloxane/dimethylsiloxane cyclic copolymers, both end trimethylsiloxy-capped methylhydrogenpolysiloxane, both end trimethylsiloxy-capped dimethylsiloxane/methylhydrogensiloxane copolymers, both end dimethylhydrogensiloxy-capped dimethylpolysiloxane, both end dimethylhydrogensiloxy-capped dimethylsiloxane/methylhydrogensiloxane copolymers, both end trimethylsiloxy-capped methylhydrogensiloxane/diphenylsiloxane copolymers, both end trimethylsiloxy-capped methylhydrogensiloxane/diphenylsiloxane/dimethylsiloxane copolymers, both end trimethylsiloxy-capped methylhydrogensiloxane/methylphenylsiloxane/dimethylsiloxane copolymers, both end dimethylhydrogensiloxy-capped methylhydrogensiloxane/dimethylsiloxane/diphenylsiloxane copolymers, both end dimethylhydrogensiloxy-capped methylhydrogensiloxane/dimethylsiloxane/methylphenylsiloxane copolymers, copolymers consisting of (CH₃)₂HSiO_{1/2} units, (CH₃)₃SiO_{1/2} units and SiO_{4/2} units, copolymers consisting of (CH₃)₂HSiO_{1/2} units and SiO_{4/2} units, copolymers consisting of (CH₃)₂HSiO_{1/2} units, SiO_{4/2} units and (C₆H₅)SiO_{3/2} units, and the above-exemplified compounds in which some or all methyl groups are substituted by other alkyl or phenyl groups. The organohydrogenpolysiloxane having at least two silicon-bonded hydrogen atoms per molecule as component (G) is clearly distinguished from component (I) as the tackifier in that it contains a silicon-bonded organic group other than the silicon bonded hydrogen atom in the molecule, which is free of a functional group such as epoxy or alkoxysilyl group.

The organohydrogenpolysiloxane may be used alone or in admixture.

The amount of the organohydrogenpolysiloxane added is to provide 0.01 to 3 moles, preferably 0.05 to 2.5 moles, more preferably 0.2 to 2 moles of silicon-bonded hydrogen atom (SiH group) per mole of the silicon-bonded alkenyl group in the alkenyl-containing organopolysiloxane.

The platinum group metal catalyst or hydrosilation addition reaction catalyst as component (H) is used to promote the addition reaction of silicon-bonded alkenyl groups in the alkenyl-containing organopolysiloxane with silicon-bonded hydrogen atoms in the organohydrogenpolysiloxane. Any of well-known platinum group metal catalysts may be used. Examples include platinum base catalysts such as platinum black, chloroplatinic acid, alcohol modified products of chloroplatinic acid, and complexes of chloroplatinic acid with olefin, aldehyde, vinylsiloxane, and acetylene alcohol compounds.

The amount of the platinum group metal catalyst blended is a catalytic amount, and may be adjusted in accordance with the desired cure rate in such a range as to provide typically 0.01 to 1,000 ppm, preferably 0.1 to 500 ppm, more preferably 1 to 300 ppm by weight of platinum group metal atoms based on the total weight of the alkenyl-containing organopolysiloxane and organohydrogenpolysiloxane.

Component (I) is a tackifier for imparting self-adhesiveness to the inventive composition. It is preferred that the self-adhesiveness be effective to metals and organic resins. Examples of component (I) include functional group-containing organosilicon compounds (exclusive of components (F) and (G)), for example, organosilanes having at least one, preferably two or more functional groups selected from the group consisting of alkenyl groups such as vinyl, (meth)acryloxy, hydrosilyl (SiH), epoxy, alkoxysilyl, carbonyl and phenyl groups, and cyclic or straight organopolysiloxanes of about 2 to 30 silicon atoms, preferably about 4 to 20 silicon atoms, and non-silicon-base (i.e., containing no silicon in the molecule) hydrocarbon compounds which contain one to four, preferably one or two aromatic rings such as mono- to tetravalent, preferably di- to tetravalent phenylene structures per molecule and at least one, preferably two to four functional groups (e.g., alkenyl groups and (meth)acryloxy groups) capable of contributing to hydrosilation addition reaction per molecule, and which may contain oxygen in the molecule.

Illustrative examples of component (I) include functional group-containing organoalkoxysilanes and functional group-containing organohydrogenpolysiloxanes as exemplified below, and functional group-containing straight organohydrogenpolysiloxanes (among the compounds exemplified below) in which the total of the numbers of repeating difunctional siloxane units is a positive integer in the range of 3 to 28, as well as derivatives of bisphenol compounds (e.g., bisphenol F, bisphenol A and bisphenol AF) or oligomers thereof in which hydroxy groups at both ends of the molecular chain are capped with alkenyloxy groups or (meth)acryloxy-substituted alkyloxy groups.

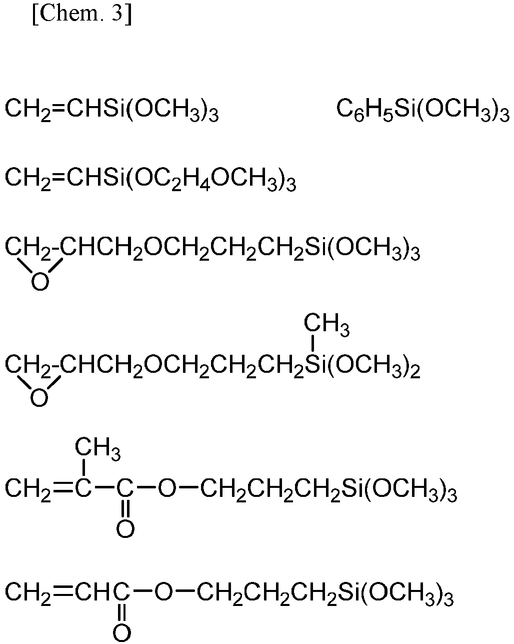

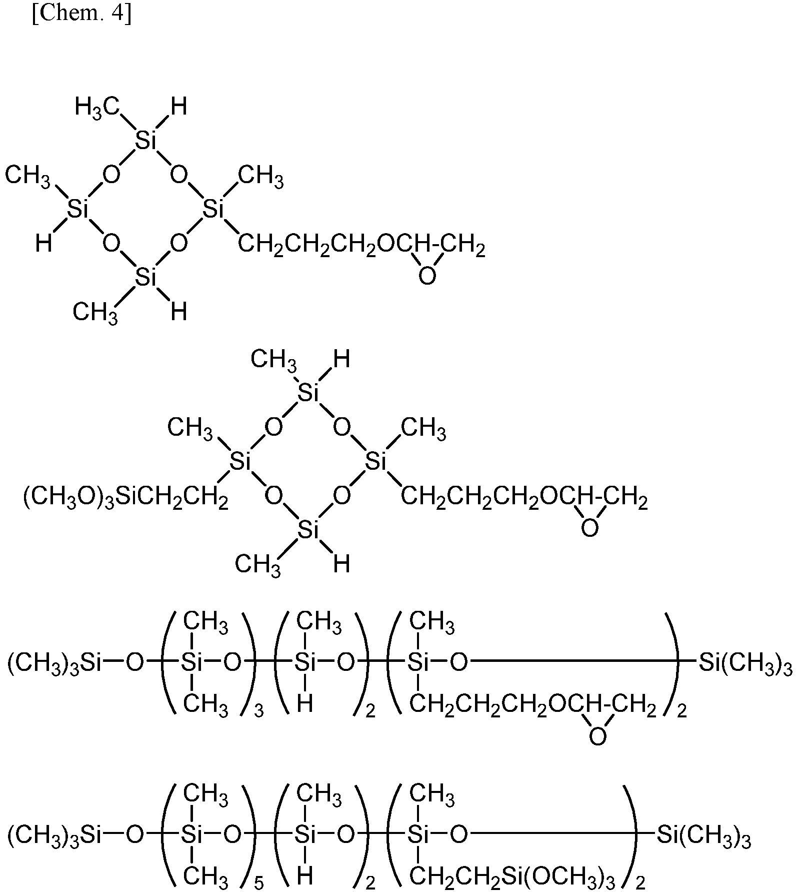

Component (I) may be used alone or in admixture. It is preferred from the aspect of adhesion to substrates to use an organosilicon compound in combination with a non-silicon-base organic compound.

The amount of component (I) blended is sufficient to provide the inventive composition with self-adhesiveness to adherends, especially metals and organic resins and, for example, preferably 0.05 to 20 parts by weight, more preferably 0.1 to 15 parts by weight, even more preferably 0.5 to 10 parts by weight per 100 parts by weight of component (F). Less than 0.05 part by weight may fail to provide sufficient adhesiveness. If the amount exceeds 20 parts by weight, the resulting cured product may have poor weather resistance and mechanical properties.

Besides the foregoing components, any optional components may be formulated in the liquid silicone adhesive of addition reaction cure type as long as the objects of the invention are not impaired. Suitable optional components include reaction inhibitors, inorganic fillers like those exemplified above for the liquid silicone adhesive of condensation cure type (exclusive of the hydroxide compound having a decomposition temperature of 180 to 600°C as component (A)), organopolysiloxanes which are free of a silicon-bonded hydrogen atom (SiH group) and a silicon-bonded alkenyl group (which are known as non-functional silicone oil), heat resistant additives, flame retardants, thixotropic agents, pigments, and dyes.

The liquid silicone adhesive of addition reaction cure type may be prepared by uniformly mixing the foregoing components on a well-known mixer according to the standard procedure.

The liquid silicone adhesive of addition reaction cure type may be cured under conditions: 23 to 150°C, especially 23 to 100°C and 10 minutes to 8 hours, especially 30 minutes to 5 hours.

### [Liquid silicone adhesive of UV cure type]

The liquid silicone adhesive of UV cure type is a liquid silicone adhesive comprising, in addition to (A) the hydroxide compound having a decomposition temperature of 180 to 600°C, (J) a UV-reactive organopolysiloxane as a base polymer, and (K) a photopolymerization initiator wherein crosslinking takes place upon exposure to UV, yielding a cured product.

The liquid silicone adhesive of UV cure type is a liquid silicone adhesive adapted for easy disassembly comprising:
(A) a hydroxide compound having a decomposition temperature of 180 to 600°C, in an amount of 25 to 80% by weight of the overall adhesive,
(J) 100 parts by weight of a UV-reactive organopolysiloxane, and
(K) 0.01 to 10 parts by weight of a photopolymerization initiator,
the content of a material capable of heat generation by electromagnetic induction being up to 3% by weight.

The UV-reactive organopolysiloxane serving as component (J) is not particularly limited as long as it functions as a base polymer in conventional UV-curable silicone compositions. It is an organopolysiloxane having at least 2, preferably 2 to 20, more preferably 2 to 10 UV-reactive groups per molecule. A plurality of UV-reactive groups in the organopolysiloxane may be all identical or different.

Examples of the UV-reactive group include alkenyl groups such as vinyl, allyl and propenyl; alkenyloxy groups such as vinyloxy, allyloxy, propenyloxy and isopropenyloxy; aliphatic unsaturated groups other than alkenyl groups such as acryloyl and methacryloyl; epoxy groups; and hydrosilyl groups. Inter alia, acryloyl, methacryloyl, mercapto, epoxy, and hydrosilyl groups are preferred, with acryloyl and methacryloyl being more preferred.

The silicon-bonded organic group other than the silicon-bonded alkenyl group is not particularly limited as long as it is free of an aliphatic unsaturated bond. Substituted or unsubstituted, aliphatic unsaturated bond-free, monovalent hydrocarbon groups of 1 to 12 carbon atoms, preferably 1 to 10 carbon atoms are exemplary. Examples of the substituted or unsubstituted, monovalent hydrocarbon group include alkyl groups such as methyl, ethyl, propyl, butyl, pentyl, hexyl and heptyl; cycloalkyl groups such as cyclohexyl; aryl groups such as phenyl, tolyl, xylyl and naphthyl; aralkyl groups such as benzyl and phenethyl; and substituted forms of the foregoing groups in which some or all of the hydrogen atoms are substituted by halogen atoms such as chlorine, fluorine, and bromine, such as halogenated alkyl groups, e.g., chloromethyl, 3-chloropropyl, and 3,3,3-trifluoropropyl. Of these, alkyl and aryl groups are preferred, with methyl and phenyl being more preferred.

Examples of the UV-reactive group-containing organopolysiloxane include both end dimethylvinylsiloxy-capped dimethylpolysiloxane, both end dimethylvinylsiloxy-capped dimethylsiloxane/methylvinylsiloxane copolymers, both end dimethylvinylsiloxy-capped dimethylsiloxane/diphenylsiloxane copolymers, both end dimethylacryloylsiloxy-capped dimethylpolysiloxane, both end dimethylacryloylsiloxy-capped dimethylsiloxane/methylvinylsiloxane copolymers, both end dimethylacryloylsiloxy-capped dimethylsiloxane/diphenylsiloxane copolymers, both end dimethylmethacryloylsiloxy-capped dimethylpolysiloxane, both end dimethylmethacryloylsiloxy-capped dimethylsiloxane/methylvinylsiloxane copolymers, both end dimethylmethacryloylsiloxy-capped dimethylsiloxane/diphenylsiloxane copolymers, both end dimethylmercaptosiloxy-capped dimethylpolysiloxane, both end dimethylmercaptosiloxy-capped dimethylsiloxane/methylvinylsiloxane copolymers, both end dimethylmercaptosiloxy-capped dimethylsiloxane/diphenylsiloxane copolymers, both end dimethylepoxysiloxy-capped dimethylpolysiloxane, both end dimethylepoxysiloxy-capped dimethylsiloxane/methylvinylsiloxane copolymers, both end dimethylepoxysiloxy-capped dimethylsiloxane/diphenylsiloxane copolymers, both end methyldivinylsiloxy-capped dimethylpolysiloxane, both end methyldivinylsiloxy-capped dimethylsiloxane/methylvinylsiloxane copolymers, both end methyldivinylsiloxy-capped dimethylsiloxane/diphenylsiloxane copolymers, both end methyldiacryloylsiloxy-capped dimethylpolysiloxane, both end methyldiacryloylsiloxy-capped dimethylsiloxane/methylvinylsiloxane copolymers, both end methyldiacryloylsiloxy-capped dimethylsiloxane/diphenylsiloxane copolymers, both end trivinylsiloxy-capped dimethylpolysiloxane, both end trivinylsiloxy-capped dimethylsiloxane/methylvinylsiloxane copolymers, both end trivinylsiloxy-capped dimethylsiloxane/diphenylsiloxane copolymers, dimethylpolysiloxane capped at one end with trimethylsiloxy and at the other end with dimethylvinylsiloxy, dimethylsiloxane/methylvinylsiloxane copolymers capped at one end with trimethylsiloxy and at the other end with dimethylvinylsiloxy, and dimethylsiloxane/diphenylsiloxane copolymers capped at one end with trimethylsiloxy and at the other end with dimethylvinylsiloxy.

The UV-reactive organopolysiloxane should preferably have a viscosity at 23°C of 100 to 500,000 mPa·s, more preferably 700 to 100,000 mPa·s.

The UV-reactive organopolysiloxane may be used alone or in admixture of two or more.

The photopolymerization initiator as component (K) has a function of promoting photopolymerization of UV-reactive groups in component (J). Examples of component (K) include, but are not limited to, acetophenone, propiophenone, benzophenone, xanthol, fluorene, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl)ketone, benzyl methoxyacetal, 2-chlorothioxanthone, diethyl acetophenone, 1-hydroxychlorophenyl ketone, 1-hydroxycyclohexyl phenyl ketone, 2-methyl-(4-(methylthio)phenyl)-2-morpholino-1-propane, 2,2-dimethoxy-2-phenylacetophenone, diethoxy acetophenone, and 2-hydroxy-2-methyl-1-phenylpropan-1-one. From the aspect of high purity, benzophenone, 4-methoxyacetophenone, 4-methylbenzophenone, diethoxyacetophenone, 1-hydroxycyclohexyl phenyl ketone, and 2-hydroxy-2-methyl-1-phenylpropan-1-one are preferred, with diethoxyacetophenone, 1-hydroxycyclohexyl phenyl ketone, and 2-hydroxy-2-methyl-1-phenylpropan-1-one being more preferred.

The photopolymerization initiator may be used alone or in admixture of two or more.

Although the amount of component (K) added is not particularly limited, the amount is preferably 0.01 to 10 parts by weight, more preferably 0.1 to 3 parts by weight, even more preferably 0.5 to 3 parts by weight per 100 parts by weight of component (J). As long as the amount of component (K) is in the range, the liquid silicone adhesive of UV cure type is easy to control cure.

As the liquid silicone adhesive of UV cure type, a liquid silicone adhesive meeting both UV cure and condensation cure functions, or a liquid silicone adhesive meeting both UV cure and addition cure functions may also be used.

The liquid silicone adhesive meeting both UV cure and condensation cure functions is a composition comprising (A) the hydroxide compound having a decomposition temperature of 180 to 600°C, component (B) mentioned above as the base polymer, component (J), a component having both a substituent group reactive with component (C) or UV and a condensable substituent group as the curing agent, component (D) mentioned above as the condensation cure catalyst, component (K) mentioned above as the UV-cure catalyst, and component (E) mentioned above as the tackifying component.

The liquid silicone adhesive meeting both UV cure and addition cure functions is a composition comprising (A) the hydroxide compound having a decomposition temperature of 180 to 600°C, component (F) mentioned above as the base polymer, component (J), component (G) mentioned above as the curing agent, component (H) mentioned above as the addition cure catalyst, component (K) mentioned above as the UV-cure catalyst, and component (I) mentioned above as the tackifying component.

The liquid silicone adhesive of UV cure type may be prepared by uniformly mixing the foregoing components on a well-known mixer according to the standard procedure.

The liquid silicone adhesive of UV cure type is cured by irradiating UV thereto. Although the UV irradiating conditions are not particularly limited, a UV-emitting diode having an emission wavelength of 365 nm is preferably used to provide an illuminance of 5 to 500 mW/cm², preferably 10 to 200 mW/cm² and a light dose of 0.5 to 100 J/cm², preferably 10 to 50 J/cm².

### [Joined assembly]

In the method for disassembling a joined assembly according to the invention, the joined assembly is composed of a plurality of (especially two) members including a member in which at least a portion of its bond interface is a metal, the members being bonded with a cured product (i.e., bonding member in the form of cured adhesive silicone rubber) obtained by curing a curable liquid silicone adhesive comprising a specific amount of a hydroxide compound having a decomposition temperature of 180 to 600°C and up to 3% by weight of a material capable of heat generation by electromagnetic induction. The members may be identical or different.

One of bonded members of the joined assembly is a member in which at least a portion of its bond interface is a metal, and the other member or members are selected from the same member (i.e., member in which at least a portion of its bond interface is a metal), organic resin members, and metal members.

The member in which at least a portion of its bond interface is a metal is a member containing a metal at least on its bond interface or in its entirety. It is acceptable that the metal at the bond interface of the member has a sufficient area to be heated by electromagnetic induction.

Examples of the member in which at least a portion of its bond interface is a metal include automobile parts and electric/electronic parts using aluminum alloys such as A1050, A2017, A5052, A5083, A6061, and A1N30, diecast aluminum alloys such as ADC1, ADC3, ADC10, ADC12, and ADC14, carbon steel such as SPCC, SS400, and SAPH, stainless steel such as SUS304 and SUS430, and magnesium alloys such as AZ-91D and AM50A.

The metal constituting the member in which at least a portion of its bond interface is a metal and the metal member may be either a magnetic or non-magnetic metal material as long as it is capable of heat generation by electromagnetic induction. Examples include pure metals such as aluminum, iron and copper, alloys containing these metals, such as aluminum alloys, typically diecast aluminum alloys, e.g., Al-Cu-Si alloys (ADC12), carbon steel (e.g., SPCC, SS400, and SAPH), cast iron (e.g., Fe-Si-C ternary alloy), stainless steel (especially ferrite), copper alloys (e.g., brass, bronze, cupro nickel), nichrome, magnesium alloys (e.g., AZ-91D, AM50A), and titanium alloys. As used herein, the magnetic metal material refers to a metal material having a relative permeability (µ/µ0), which is a ratio of vacuum permeability (µ0) to initial permeability (µ), of at least 5, especially at least 50.

Examples of the organic resin constituting the organic resin member include PBT (polybutylene terephthalate resin), PPS (polyphenylene sulfide resin), polyamide resins such as PA66 (nylon 66) and PA6 (nylon 6), and PC (polycarbonate resin).

The organic resin or metal constituting the member in which at least a portion of its bond interface is a metal, the organic resin member or the metal member should desirably have a heat resistant temperature of at least 160°C.

### [Preparation of joined assembly]

The joined assembly is prepared by manually applying or mechanically dispensing a curable liquid silicone adhesive comprising a hydroxide compound having a decomposition temperature of 180 to 600°C and up to 3% by weight of a material capable of heat generation by electromagnetic induction to the surface of one member so as to define a join area (e.g., gasket), mating the other member to the one member, and curing the adhesive to bond the members. Thereafter, the members are secured by means of bolts, if necessary.

When the curable liquid silicone adhesive is a liquid silicone adhesive of condensation cure type, which cures with air-borne moisture at room temperature, the joined members are allowed to stand after they are mated together, whereupon cure takes place. When it is desired to accelerate the cure speed, moistening is effective. Also, when the curable liquid silicone adhesive is a liquid silicone adhesive of addition reaction cure type, which cures at a temperature of 23 to 150°C via addition reaction, the mated members are allowed to stand or heated after they are mated together, whereupon cure takes place. When the curable liquid silicone adhesive is a liquid silicone adhesive of UV cure type, the photopolymerization initiator reacts upon irradiation of UV whereupon curing reaction takes place. If necessary, secondary cure may be carried out. The secondary cure conditions include a temperature of preferably at least 120°C, more preferably at least 150°C, and below the decomposition temperature of the hydroxide compound and up to 250°C. The cure time is preferably 10 minutes to 48 hours, more preferably 30 minutes to 24 hours.

Examples of the joined assembly include automobile parts such as engines, transmissions, automobile electric parts like electronic control units (ECU) and power control units (PCU) and electric/electronic parts such as smartphones, tablets, liquid crystal displays, and batteries.

The joined assembly maintains the bonded state of members at a service environment temperature of up to 150°C, preferably room temperature to 120°C.

The joined assembly is preferably easy to disassemble in that during normal service, the members are joined by a certain bonding force, and after electromagnetic induction heating, the bonding force is reduced to a sufficient level to allow the members to be separated apart. Specifically, the joined assembly preferably has an initial shear bonding force of at least 1.2 MPa, more preferably at least 1.5 MPa. After electromagnetic induction heating, the joined assembly preferably has a shear bonding force of up to 1 MPa. The shear bonding force is measured according to the method of JIS K6850. In order that the initial shear bonding force and the shear bonding force after electromagnetic induction heating fall in the above ranges, the curable liquid silicone adhesive is formulated to a composition within the above-mentioned specific range.

### [Disassembly method]

The invention provides a method for disassembling a joined assembly comprising the steps of heating the metal portion of the bond interface by electromagnetic induction for indirectly heating the metal-contacting portion or the entirety of the cured product (adhesive cured silicone rubber, obtained by curing the curable liquid silicone adhesive as a bonding member) at 160 to 800°C, whereupon the metal member spontaneously separates apart or the metal member is separated from the other member by manual forcing or using a scraper or similar tool. The joined assembly is disassembled in this way. The disassembled members are ready for recycling.

Presumably, the disassembling of the joined assembly according to the invention is possible for the following reason.

The metal forming the bond interface and the bonding member have largely different coefficients of linear expansion. Upon heating, a large thermal stress is applied to the bond interface due to the difference of thermal expansion. When the joined assembly is composed of members of heterogeneous materials, a thermal stress is applied between joined members due to the difference of thermal expansion. When the metal of the bond interface is heated by electromagnetic induction, the hydroxide compound as component (A) in the cured product (or adhesive cured silicone rubber) of the curable liquid silicone adhesive as the bonding member is heated and decomposed to generate water. The thus generated water is vaporized to form bubbles so that the cured product may lose the bonding force. As a result, the joined assembly can be quickly disassembled.

The electromagnetic induction heating is preferably performed at a frequency, power and time which allow the members to be separated apart. The frequency may be selected in the range of 100 kHz to 500 kHz. The power may be selected in the range of 500 W to 5 kW. The heating time by electromagnetic induction is up to 2 minutes, preferably up to 1 minute, more preferably up to 20 seconds, though not critical.

### EXAMPLES

Composition Examples, Composition Comparative Examples, Examples and Comparative Examples are given below for further illustrating the invention, but the invention is not limited thereto. In the following Examples, room temperature is 23°C, the viscosity is measured at 23°C by a rotational viscometer, and the average particle size is measured as a cumulative weight average value D50 (or median diameter) using a particle size distribution measuring system according to the laser light diffraction method. The BET specific surface area is calculated on the basis of the BET equation from the adsorption isotherm measured by the nitrogen gas adsorption method.

### Preparation of curable liquid silicone adhesive (composition)

### [Composition Example 1]

Composition 1 was obtained by uniformly mixing 70 parts by weight of dimethylpolysiloxane capped with trimethoxysilyl groups at both ends of the molecular chain and having a viscosity of 30,000 mPa·s, 40 parts by weight of dimethylpolysiloxane capped with trimethylsilyl groups at both ends of the molecular chain and having a viscosity of 100 mPa·s, 80 parts by weight (the content in the overall composition: 31.0% by weight) of surface-untreated aluminum hydroxide having an average particle size of 10 µm, 50 parts by weight of colloidal calcium carbonate surface-treated with fatty acid and having a BET specific surface area of 17 m²/g, 8 parts by weight of vinyltrimethoxysilane, 2 parts by weight of a compound having the formula (1), and 0.8 part by weight of diisopropoxytitanium bis(ethyl acetoacetate).

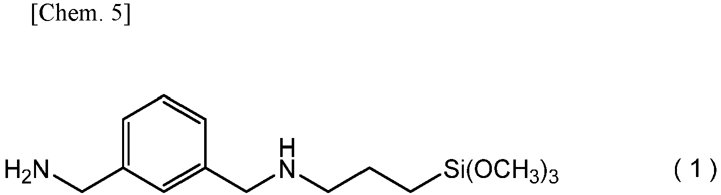

### [Composition Example 2]

Composition 2 was obtained by uniformly mixing 85 parts by weight of dimethylpolysiloxane capped with hydroxy groups at both ends of the molecular chain and having a viscosity of 20,000 mPa·s, 15 parts by weight of dimethylpolysiloxane capped with trimethylsilyl groups at both ends of the molecular chain and having a viscosity of 100 mPa·s, 70 parts by weight (the content in the overall composition: 31.9% by weight) of surface-untreated aluminum hydroxide having an average particle size of 10 µm, 30 parts by weight of heavy calcium carbonate surface-treated with paraffin and having a BET specific surface area of 2.0 m²/g, 9 parts by weight of fumed silica surface-treated with dimethyldichlorosilane and having a BET specific surface area of 120 m²/g, 9.2 parts by weight of vinyltris(1-cyclopenten-1-yloxy)silane, 0.4 part by weight of γ-(N,N,N',N'-tetramethylguanidyl)propyltrimethoxysilane, 0.4 part by weight of the compound having formula (1), and 0.4 part by weight of γ-aminopropyltriethoxysilane.

### [Composition Example 3]

Composition 3 was obtained by uniformly mixing 70 parts by weight of dimethylpolysiloxane capped with trimethoxysilyl groups at both ends of the molecular chain and having a viscosity of 30,000 mPa·s, 40 parts by weight of dimethylpolysiloxane capped with trimethylsilyl groups at both ends of the molecular chain and having a viscosity of 100 mPa·s, 80 parts by weight (the content in the overall composition: 30.8% by weight) of surface-untreated aluminum hydroxide having an average particle size of 10 µm, 50 parts by weight of colloidal calcium carbonate surface-treated with fatty acid and having a BET specific surface area of 17 m²/g, 2 parts by weight (the content in the overall composition: 0.8% by weight) of iron powder having an average particle size of 30 µm, 8 parts by weight of vinyltrimethoxysilane, 2 parts by weight of the compound having formula (1), and 0.8 part by weight of diisopropoxytitanium bis(ethyl acetoacetate).

### [Composition Comparative Example 1]

Composition 4 was obtained by uniformly mixing 70 parts by weight of dimethylpolysiloxane capped with trimethoxysilyl groups at both ends of the molecular chain and having a viscosity of 30,000 mPa·s, 40 parts by weight of dimethylpolysiloxane capped with trimethylsilyl groups at both ends of the molecular chain and having a viscosity of 100 mPa·s, 5 parts by weight of fumed silica, 50 parts by weight of colloidal calcium carbonate surface-treated with fatty acid and having a BET specific surface area of 17 m²/g, 8 parts by weight of vinyltrimethoxysilane, 2 parts by weight of the compound having formula (1), and 0.8 part by weight of diisopropoxytitanium bis(ethyl acetoacetate).

### [Composition Comparative Example 2]

Composition 5 was obtained by uniformly mixing 70 parts by weight of dimethylpolysiloxane capped with trimethoxysilyl groups at both ends of the molecular chain and having a viscosity of 30,000 mPa·s, 40 parts by weight of dimethylpolysiloxane capped with trimethylsilyl groups at both ends of the molecular chain and having a viscosity of 100 mPa·s, 100 parts by weight (the content in the overall composition: 30.5% by weight) of surface-untreated aluminum hydroxide having an average particle size of 10 µm, 50 parts by weight of colloidal calcium carbonate surface-treated with fatty acid and having a BET specific surface area of 17 m²/g, 50 parts by weight (the content in the overall composition: 15.2% by weight) of iron powder having an average particle size of 30 µm, 8 parts by weight of vinyltrimethoxysilane, 2 parts by weight of the compound having formula (1), and 0.8 part by weight of diisopropoxytitanium bis(ethyl acetoacetate).

### [Preparation of joined assembly]

By using a substrate of diecast aluminum alloy ADC12 of 25 mm wide and 50 mm long and a substrate of polybutylene terephthalate (PBT) resin having a heat resistant temperature of 150°C or higher of 25 mm wide and 50 mm long as the substrates, using any one of Compositions 1 to 5 as the curable liquid silicone adhesive, mating the ADC12 substrate with the PBT substrate so as to define a bond thickness of 0.5 mm and a bond area of 2.5 cm², and curing the adhesive at 23°C/50% RH for 7 days, a joined assembly was prepared in which the substrates were bonded with the cured product (or adhesive cured silicone rubber) of the curable liquid silicone adhesive.

### Evaluation of ease of disassembly

### [Examples 1 to 3 and Comparative Examples 1 and 2]

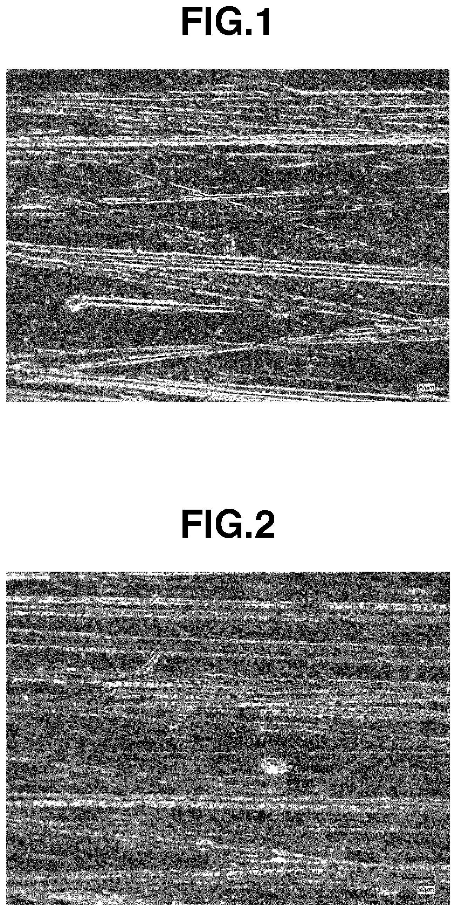

The joined assembly prepared above was evaluated by the following evaluation methods. The results are shown in FIGS. 1 and 2.

### (1) Initial bonding force

The joined assembly prepared above was measured for shear bonding force according to the method of JIS K6850.

### (2) Time until disassembly

An IH heater EASYHEAT 0224 (Alonics, Ltd.) was used for electromagnetic induction heating. Electromagnetic induction heating was conducted at frequency 286 kHz and power 2.3 kW to heat the metal portion of the bond interface and continued until the joined assembly was disassembled. The time taken until disassembly was measured using a stop watch. Judgment is "Pass" when the time is 15 seconds or shorter and "Reject" when the time exceeds 15 seconds. For all the compositions, the joined assemblies were disassembled merely by heating.

### (3) The state of bond surface as disassembled by electromagnetic induction heating

The state of the bond surface of the ADC12 substrate as disassembled was observed under a digital microscope VHX8000 (Keyence Corp.). FIG. 1 shows the state prior to electromagnetic induction heating in Example 1. FIG. 2 shows the state after electromagnetic induction heating in Example 1. The surface state of the PBT substrate was visually observed after the adhesive remaining thereon was scraped off by a cutting knife. The judgment "unchanged" was given when the surface states of both the ADC12 and PBT substrates remained unchanged before and after electromagnetic induction heating.

### (4) Bonding force after recycling

The members as disassembled by electromagnetic induction heating were examined for recyclability. The ADC12 substrate was used as such. The PBT substrate was used after scraping off the adhesive by a cutting knife, applying a silicone decomposing agent (silicone cleaner X-100) to completely remove the adhesive, water washing, and drying. A joined assembly was prepared by the same method as above. It was measured for shear bonding force according to the method of JIS K6850.

**[Table 1]**

| | Example 1 | Example 2 | Example 3 | Comparative Example 1 | Comparative Example 2 |
|---|---|---|---|---|---|
| Composition | 1 | 2 | 3 | 4 | 5 |
| Initial bonding force (MPa) | 1.6 | 1.7 | 1.8 | 1.2 | 1.8 |
| Time until disassembly (sec) | 12 | 12 | 14 | 25 | 20 |
| Time until disassembly (Pass/Reject) | Pass | Pass | Pass | Reject | Reject |
| State of bond surface as disassembled by IH | Unchanged | Unchanged | Unchanged | Unchanged | Resin melted |
| Bonding force after recycling (MPa) | 1.7 | 1.7 | 1.7 | 1.2 | Joined assembly could not be prepared |

As is evident from the above results, the joined assemblies of Examples 1 to 3 according to the disassembly method of the invention could be easily disassembled in a short time of 12 to 14 seconds and with a reduced energy consumption. The members could be recycled.

The joined assembly of Comparative Example 1 could be disassembled. However, the effect that the bonding force is reduced by bubble formation was not available because no hydroxide compound was added. Thus, the time until disassembly was prolonged. Yet the members could be recycled. In Comparative Example 2 wherein 15.2% by weight of metal powder was added to the composition, the adhesive was also heated, and the PBT substrate was melted and could not be recycled.

## Claims

1. In conjunction with a joined assembly composed of a plurality of members including a member in which at least a portion of its bond interface is a metal, the members being bonded with a cured product obtained by curing a curable liquid silicone adhesive comprising 25 to 80% by weight of a hydroxide compound having a decomposition temperature of 180 to 600°C and up to 3% by weight of a material capable of heat generation by electromagnetic induction,
a method for disassembling the joined assembly comprising the steps of heating the metal portion of the bond interface by electromagnetic induction and separating the member containing the metal portion from the remaining members.

2. The disassembling method of claim 1 wherein the curable liquid silicone adhesive is a condensation cure type liquid silicone adhesive, an addition reaction cure type liquid silicone adhesive or UV cure type liquid silicone adhesive.

3. The disassembling method of claim 1 wherein the hydroxide compound having a decomposition temperature of 180 to 600°C is at least one compound selected from aluminum hydroxide, magnesium hydroxide, and aluminum oxide hydroxide (or boehmite).

4. The disassembling method of claim 1 wherein the heating step is by electromagnetic induction at a frequency of 100 kHz to 500 kHz.

5. The disassembling method of claim 1 wherein the joined assembly is an automobile part or electric/electronic part.

6. A condensation cure type liquid silicone adhesive adapted for easy disassembly for use in the disassembling method of any one of claims 1 to 5, comprising the following components (A) to (E) and containing up to 3% by weight of a material capable of heat generation by electromagnetic induction,
(A) a hydroxide compound having a decomposition temperature of 180 to 600°C, in an amount of 25 to 80% by weight of the overall adhesive,
(B) 100 parts by weight of a linear diorganopolysiloxane capped at both ends of the molecular chain with a silicon-bonded hydroxy group and/or hydrolyzable silyl group,
(C) 0.1 to 40 parts by weight of a hydrolyzable organosilane compound having at least three silicon-bonded hydrolyzable groups per molecule and/or a partial hydrolytic condensate thereof,
(D) 0.001 to 20 parts by weight of a curing catalyst, and
(E) 0.05 to 20 parts by weight of a silane coupling agent.

7. An addition reaction cure type liquid silicone adhesive adapted for easy disassembly for use in the disassembling method of any one of claims 1 to 5, comprising the following components (A) and (F) to (H) and containing up to 3% by weight of a material capable of heat generation by electromagnetic induction,
(A) a hydroxide compound having a decomposition temperature of 180 to 600°C, in an amount of 25 to 80% by weight of the overall adhesive,
(F) 100 parts by weight of an alkenyl-containing organopolysiloxane having a silicon-bonded alkenyl group at the end of the molecular chain,
(G) an organohydrogenpolysiloxane having at least two silicon-bonded hydrogen atoms per molecule in an amount to provide 0.01 to 3 moles of silicon-bonded hydrogen per mole of the silicon-bonded alkenyl group in component (F),
(H) a platinum group metal catalyst in an amount to provide 0.01 to 1,000 ppm by weight of platinum group metal atom based on the total weight of components (F) and (G), and
(I) 0.05 to 20 parts by weight of a tackifier.

8. A UV cure type liquid silicone adhesive adapted for easy disassembly for use in the disassembling method of any one of claims 1 to 5, comprising the following components (A), (J) and (K) and containing up to 3% by weight of a material capable of heat generation by electromagnetic induction,
(A) a hydroxide compound having a decomposition temperature of 180 to 600°C, in an amount of 25 to 80% by weight of the overall adhesive,
(J) 100 parts by weight of a UV-reactive organopolysiloxane, and
(K) 0.01 to 10 parts by weight of a photopolymerization initiator.
